# EUROPEAN PATENT APPLICATION

(11) **EP 2 738 954 A2**
(43) Date of publication of application: **04.06.2014**
(21) Application number: 13193787.2
(22) Date of filing: 21.11.2013
(51) Int. Cl.: H04B 7/08

(54) **A receiver for recovering universal services in a spot beam satellite transmission system and method**

(30) Priority: 29.11.2012 US 201213688542
(71) Applicant: Delphi Technologies, Inc., Troy MI 48007 (US)
(72) Inventor: Walker, Glenn A., Greentown, IN Indiana 46936 (US); Dibiaso, Eric A., Lebanon, PA Pennsylvania 17042 (US); McDanell, Roger A., Carmel, IN Indiana 46033 (US); Hiatt Jr., Michael L., Westfield, IN Indiana 46074 (US)
(74) Representative: Neill, Andrew Peter

(57) **Abstract**

A terrestrial receiver (58) and method for recovering universal services in a spot beam satellite radio transmission system (46) including at least two discrete signal sources (48 and 50) producing first and second adjacent or overlapping spot beam loci (52 and 54) within a coverage area (42), wherein the signals (60 and 62) forming the spot beams (52 and 54) each contain repeating time aligned universal services having a master synchronizing frame, at least one common channel, and at least one spot specific channel with differing frequency and/or polarization. The receiver (58) switches among a plurality of antenna elements (12) to receive a signal. At least a portion of plurality of antenna elements (12) receive a transmitted signal, such that the transmitted signal includes a plurality of sub-channels that are transmitted in predetermined time intervals. A switching device (14) is in communication with the plurality of antenna elements (12), and switches among single antenna elements (12) to receive the transmitted signal. A controller (16) is in communication with the switching device (14), and commands the switching device (14) to select each of the antenna elements (12) separately in predetermined periods of time based upon the predetermined time intervals of each of the master synchronizing frames. A power level of the transmitted signal is determined during the predetermined period of time that corresponds to the predetermined time intervals, and the controller (16) commands the switching device (14) to switch to an antenna element (12) based upon the determined power level.

## Description

### Technical Field

The present invention generally relates to a satellite receiver system and method for receiving a signal, and more particularly, to such a receiver system and method for switching among a plurality of antenna elements to receive a signal.

### Background of the Disclosure

Generally, a receiver system can include multiple antennas for receiving different signals or the same signals. One example of such a system is where a first antenna is used to receive a first signal, and a second antenna is configured to receive a second signal. Thus, the first and second antennas generally cannot be used to receive both the first and second signals because the signals are being transmitted differently (i.e., transmitted in different modulation formats) or being transmitted from different sources.

Another example of a receiver system having multiple antennas is a receiver system that uses a blind antenna switching method. Generally, a blind antenna switching method is where a first antenna is used to receive a signal, and the receiver system switches to the second antenna when a power level of the signal received by the first antenna is below a predetermined level. Typically, the receiver system using the blind antenna switching method does not know the power level of the signal received by the second antenna until the receiver system switches to the second antenna. Generally, the receiver system is assuming that since the power level of the signal received by the first antenna is below the predetermined value that the signal received by the second antenna is likely to be equal to or better than the power level of the signal received by the first antenna prior to switching. Generally, the receiver system blindly switches back to the first antenna when the power level of the signal received by the second antenna is below a predetermined level. However, when blindly switching between the first and second antennas, the power level of the signal being received by the other antenna is unknown until the receiver system switches to that antenna.

These and other features and advantages of this invention will become apparent upon reading the following specification, which, along with the drawings, describes preferred and alternative embodiments of the invention in detail.

### Summary of the Invention

Satellite radio systems employ spot beam technology to enable more services to be transmitted to users. The spot beam technology allows the service provider to optimize the available transmit power for user needs, An example would be traffic information or regional news that is highly desirable for users in a given location, but not as desirable for users in a distant location. Spot beams can take the form of a different frequency or polarization.

However, it is also desirable to have universal services available to all users over the coverage area of a satellite system. These could include popular music channels that traverse a broad spectrum of regions and populations. These universal services can be simultaneously transmitted inside multiple regional spot beams where they are available to all users regardless of which beam the receiver is tuned to.

When the satellite transmission has time aligned the universal services, then the receiver does not have to be concerned incorrect symbol recovery and frame synchronization. This can be achieved with the two relatively new satellite radio standards DVB-SH and E-SDR.

When a simple antenna is used and the spot beams are on opposite polarizations, the receiver must tell the antenna to switch to the desired polarization. However, the receiver may not know if the different polarization is available. It is always desirable to use the strongest signal possible. When the satellite transmission system has time aligned the universal services, then the receiver does not have to worry about incorrect symbol recovery and frame synchronization.

At first glance, it may appear that the receiver can just jump between the two polarizations to determine which one to use. However, when the other polarization is not present, the interleaver and FEC are filled with "junk" information.

According to one aspect of the invention, a receiver provides the following functionalities:
(1.) Switch to the unknown polarization prior to the master frame synchronization to ensure that the current beam signal is unaffected;
(2.) Determine if a "new" beam is better than the "old" beam; and
(3.) Switch back to the "old" beam if the "new" beam has no or a smaller energy level prior to the end of the signaling pipe transmission, just prior to the pre-amble preceeding the usable data.

According to another aspect of the present invention, a receiver system includes a plurality of antenna elements, a switching device, and a controller. At least a portion of the plurality of antenna elements receive a transmitted signal, wherein the transmitted signal includes a plurality of sub-channels that are transmitted in predetermined time intervals. The switching device is in communication with the plurality of antenna elements, and switches among single antenna elements to receive the transmitted signal. The controller is in communication with the switching device, and commands the switching device to select each of the plurality of antenna elements separately in predetermined periods of time based upon the predetermined time intervals of each of the sub-channels. A power level of the signal is determined during the predetermined period of time that corresponds to the predetermined time intervals, and the controller commands the switching device to switch to an antenna element based upon the determined power level.

According to still another aspect of the present invention, a receiver system includes a plurality of antenna elements, a switching device, and a receiving module. At least a portion of the plurality of antenna elements receives a transmitted signal that is time division multiplexed (TDM), such that the transmitted signal includes a plurality of sub-channels that are transmitted in predetermined time intervals. The switching device is in communication with the plurality of antenna elements, and switches among single antenna elements to receive the transmitted signal. The receiving module houses a controller that is in communication with the switching device, wherein the controller commands the switching device to select each of the plurality of antenna elements separately in predetermined periods of time based upon the predetermined time intervals of each of the sub-channels. The receiving module processes the transmitted signal to produce an output based upon a selected sub-channel, and determines a power level of the transmitted signal at at least a portion of the plurality of antenna elements during a predetermined period of time that corresponds to the time interval of a non-selected sub-channel, wherein the controller commands the switching device to switch to an antenna element with a greater determined power level to receive the transmitted signal during the time interval of the selected sub-channel.

According to yet another aspect of the present invention, a method of switching among antenna elements in a receiver system includes the steps of transmitting a signal including a plurality of sub-channels, wherein the sub-channels are transmitted in predetermined time intervals, and receiving the transmitted signal by an antenna element of a plurality of antenna elements, wherein the transmitted signal containing a selected sub-channel is processed. The method further includes the steps of switching among at least a portion of the plurality of antenna elements, and receiving the transmitted signal during a predetermined period of time that corresponds to the predetermined time intervals of the non-selected sub-channels, determining a power level of the transmitted signal during the predetermined period of time, and switching to the antenna element receiving the transmitted signal at a greater determined power level during the predetermined time interval of the selected sub-channel.

These and other features, advantages and objects of the present invention will be further understood and appreciated by those skilled in the art by reference to the following specification, claims and appended drawings.

### Brief Description of the Drawings

The present invention will now be described, by way of example, with reference to the accompanying drawings, in which:
Fig. 1 is an environmental view of a receiver system, in accordance with one embodiment of the present invention;
Fig. 2 is a diagram illustrating time intervals of sub-channels of each of two diverse transmitted time division multiplexed (TDM) signals, according to one embodiment of the present invention;
Fig. 3 is a flowchart illustrating the comparison of two intersecting spot beams carrying diverse signals;
Fig. 4 is a block diagram of a receiver system having a plurality of antenna modules, according to one embodiment of the present invention;
Fig. 5 is a diagram illustrating time intervals of sub-channels of a transmitted time division multiplexed (TDM) signal, according to one embodiment of the present invention;
Fig. 6 is a block diagram of a receiver system having a single antenna module, in accordance with an alternate embodiment of the present invention;
Fig. 7 is a block diagram of a receiver system having a plurality of antenna modules, in accordance with an alternate of the present invention;
Fig. 8 is a flow chart illustrating a method of switching among antenna elements of a receiver system, in accordance with one embodiment of the present invention; and
Fig. 9 is an environmental view of a receiver system, in accordance with one embodiment of the present invention.

Although the drawings represent embodiments of the present invention, the drawings are not necessarily to scale and certain features may be exaggerated in order to illustrate and explain the present invention. The exemplification set forth herein illustrates an embodiment of the invention, in one form, and such exemplifications are not to be construed as limiting the scope of the invention in any manner.

### Description of Preferred Embodiments

Current spectrum holders are planning to launch satellites that transmit spot beams. This trend is both beneficial and detrimental to global satellite radio reception. The benefit is the provision of more targeted content to specific regions, with increased overall channel capacity of the system. The detriment is that not all channels are available everywhere. But the channels that are available everywhere are transmitted at different frequencies and potentially different polarizations. The problem addressed by the present invention is how to maintain a seamless transition from one spot beam to another when the user transitions between two regions.

The present invention provides a solution to the above described issues wherein the satellite radio receiver quickly switches to another polarization/frequency to check if the signal is present during times that contain no user content. This is accomplished by employing a transmission parameter signal that is transmitted periodically that rarely changes. During this time, the receiver can evaluate new signals and switch back. Since this signal rarely changes, the user will not notice any mutes.

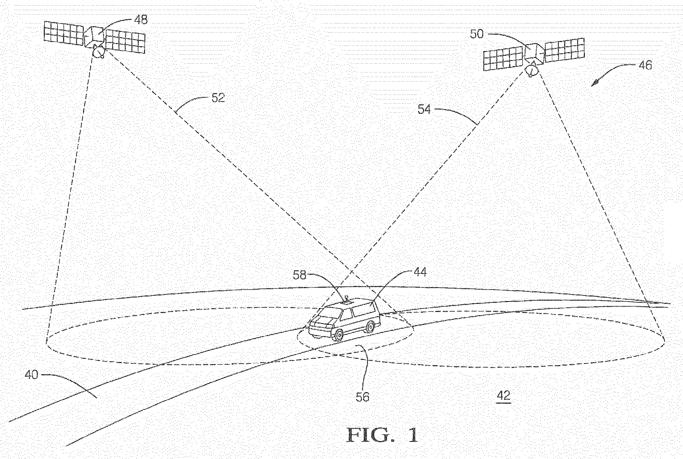

Referring to Figure 1, a motorway 40 for ground vehicles 44 transits a terrestrial region 42. A spot beam satellite transmission system 46 provides signal coverage to the entire region 42 and, in the illustrated embodiment, includes two satellites 48 and 50. Each satellite 48 and 50 comprises a discrete signal source, collectively producing first and second adjacent overlapping spot beam loci 52 and 54 within region 42. Vehicle 44 is illustrated in the area if intersection 56 of the overlapping spot beam loci 52 and 54, wherein a single radio signal receiver 58 carried with the vehicle 44 is capable of simultaneously receiving signals from both satellites 48 and 50.

According to one embodiment, the transmitted signals from each satellite 48 and 50 are time division multiplexed (TDM). Generally, each TDM signal includes a plurality of sub-channels, which appear to be transferred simultaneously, but are individually transmitted during recurrent time intervals that are fixed in length. Typically, the sub-channels of the transmitted TDM signal appear as data bursts, such that the data received in the selected sub-channel is processed to emit an output during the period of time that the selected sub-channel and other sub-channels or non-selected sub-channels, are being transmitted, without leaving a null or void in the output. Thus, the non-selected sub channels are the sub-channels that contain data that is not currently being used or processed to emit the output. By way of explanation and not limitation, an existing system that transmits such a TDM signal is the Sirius® satellite system.

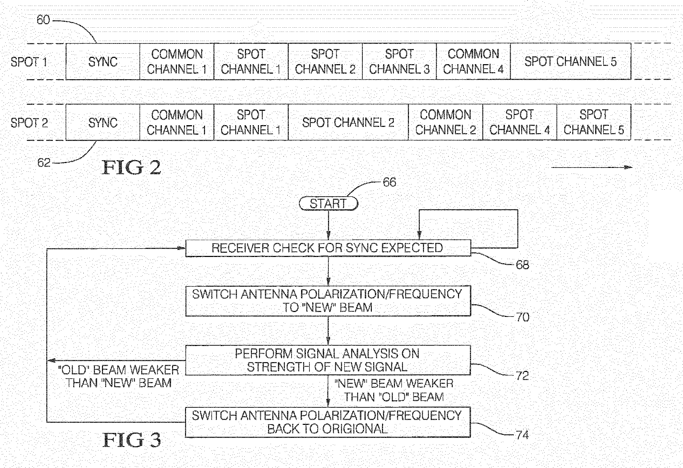

Referring to Figure 2, exemplary time correlated diagrams of a first signal 60 associated with spot 52 and a second signal 62 associated with spot 54 are illustrated. The signals 60 and 62 are transmitted in alignment as illustrated, wherein the SYNC portion of the signals are correlated and contain static information, along with a synchronization signal. Furthermore, common channels 1 of signals 60 and 62 have the same content, as do common channels 2. Signal 1 channels 1 - 5 differ in timing, duration and/or content from signal 2 channels 1 - 5.

By knowing when to expect the SYNC portion of signals 60 and 62, the receiver 58 can tune to from spot beam 52 to spot beam 54, or vice versa, and check for availability. If the other beam is available and stronger in signal strength, the receiver can stay tuned to the new channel, otherwise it will tune back to the original signal. If the user is tuned to a channel that is not available on a stronger beam, the receiver can notify the user.

Referring to Figure 3, a flow chart illustrating the logic steps for switching between available channels illustrates one embodiment of the invention. The switching can be achieved by switching between multiple antennas carried by the vehicle 44, or reconfiguring the single receiver antenna to alter its frequency or polarization characteristics.

The method of switching between available channels is affected by a reference identifier 64. The method starts at step 66 and proceeds to step 68 where the receiver checks for an expected SYNC signal portion. If expected SYNC signal portion is not present, the logic returns to step 68 to re-check for an expected SYNC signal portion. This continues until a SYNC signal if found. When a SYNC signal is found, the method proceeds to step 70 wherein the radio controller switches the active antenna polarization/frequency to another "new" beam signal. At step 72 the controller performs a signal analysis to determine the strength of the "new" signal. This step could include metrics such as a frame header, preamble sequences and the like. If the signal strength of the "old" beam signal is weaker than that of the "new" beam signal, the control returns to original step 68 to recheck for a SYNC signal. If the signal strength of the "new" beam signal is weaker than that of the previous "old" beam signal, the controller moves to step 74 and switches the antenna polarization/frequency back to its original condition.

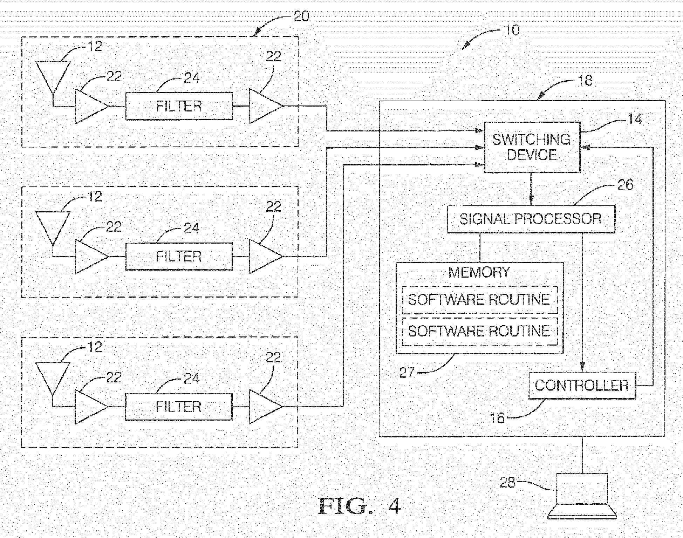

Figures 4 - 9 describe a receiver system and method for switching among a plurality of antenna elements to receive a signal applicable for practicing the present invention. At least a portion of plurality of antenna elements receive a transmitted signal, such that the transmitted signal includes a plurality of sub-channels that are transmitted in predetermined time intervals. A switching device is in communication with the plurality of antenna elements, and switches among single antenna elements to receive the transmitted signal. A controller is in communication with the switching device, and commands the switching device to select each of the antenna elements separately in predetermined periods of time based upon the predetermined time intervals of each of the sub-channels. A power level of the transmitted signal is determined during the predetermined period of time that corresponds to the predetermined time intervals, and the controller commands the switching device to switch to an antenna element based upon the determined power level.

The antenna switching methodology described in connection with Figures 4 - 9 can be radially applied in implementing the present invention.

In reference to Fig. 4, a receiver system is generally shown at reference identifier 10. The receiver system 10 includes a plurality of antenna elements 12, wherein at least a portion of the plurality of antenna elements 12 receive a transmitted signal. The transmitted signal includes a plurality of sub-channels that are transmitted in predetermined time intervals, such that the desired data is transmitted within at least one of the sub-channels, as described in greater detail below. The receiver system 10 also includes a switching device 14 that is in communication with a plurality of antenna elements 12. The switching device selects a single antenna element of the plurality of antenna elements 12 to receive the transmitted signal.

The receiver system 10 further includes a controller 16 that is in communication with the switching device 14. The controller 16 commands the switching device 14 to select each of the plurality of antenna elements 12 separately in predetermined periods of time based upon the predetermined time intervals of each of the sub-channels. According to one embodiment, a power level of the transmitted signal is determined during a predetermined period of time that corresponds to the predetermined time intervals of the sub-channels, as described in greater detail herein.

According to one embodiment, the transmitted signal is time division multiplexed (TDM). Generally, a TDM signal includes a plurality of sub-channels, which appear to be transferred simultaneously, but are individually transmitted during recurrent time intervals that are fixed in length. Typically, the sub-channels of the transmitted TDM signal appear as data bursts, such that the data received in the selected sub-channel is processed to emit an output during the period of time that the selected sub-channel and other sub-channels or non-selected sub-channels, are being transmitted, without leaving a null or void in the output. Thus, the non-selected sub-channels are the sub-channels that contain data that is not currently being used or processed to emit the output. By way of explanation and not limitation, an existing system that transmits such a TDM signal is the Sirius® satellite system.

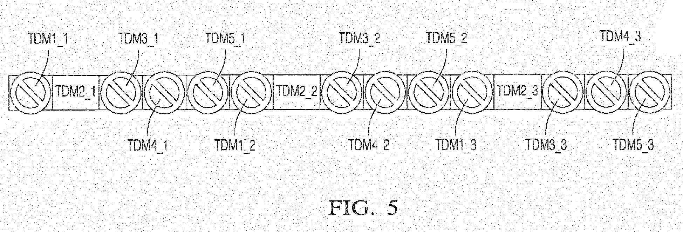

With regards to Figs. 4 - 7, an exemplary diagram of sub-channels being transmitted in a TDM signal is shown in Fig. 5. For purposes of explanation and not limitation, if sub-channel TDM2 contains the data that is currently desired (i.e., TDM2 is the selected sub-channel and TDM1, TDM3, TDM4, and TDM5 are the non-selected sub-channels), one of the antenna elements 12 receives the transmitted TDM signal, and the data received during the TDM2 sub-channel time interval is processed to produce the emitted output. According to one embodiment, the data processed from the TDM2 sub-channel is received during a first predetermined time interval (e.g., TDM2_1), and processed during the time intervals where sub-channels TDM3_1, TDM4_1, TDM5_1, and TDM1_2 are received. Thus, the selected sub-channel is processed and an output is emitted based upon the selected sub-channel during the period of time that corresponds to the predetermined time intervals of the non-selected sub-channels, and the predetermined time interval of the selected sub-channel. During the predetermined time intervals where the non-selected sub-channels are being received, the receiving system 10 can alternate which antenna element 12 is being used to receive the signal to determine if the signal can be received at a greater power level using a different antenna element 12. By switching between antenna elements 12 during the predetermined time intervals of the non-selected sub-channels, and thus, the data being transmitted in the sub-channel does not have to be processed, the receiver system 10 does not have to lock to the phase of the signal received by the different antenna elements 12. Thus, the antenna element 12 can be selected, and the power level of the signal can be determined without being required to process the received signal. According to one embodiment shown in Fig. 4, the switching device 14 is housed in a receiver module generally indicated at 18, and each antenna element 12 is housed in a separate antenna module generally indicated at 20. According to one embodiment, the antenna module 20 also houses at least one low-noise amplifier (LNA) 22, wherein one LNA 22 is in communication with the antenna element 12. According to a disclosed embodiment, a filter 24 is in communication between multiple LNAs 22, which typically removes undesirable noise from the received signal.

According to one embodiment, the receiver module 18 houses a signal processor 26 in communication with the switching device 14. According to a disclosed embodiment, the signal processor 26 is in communication with a memory device 27 that includes one or more software routines for processing the received signal. Additionally or alternatively, the signal processor 26 includes circuitry for processing the received signal. According to a disclosed embodiment, the signal processor 26 down-converts the radio frequency (RF) of the received signal from the antenna element 12 to a lower frequency, and digitally demodulates the received signal. It should be appreciated by those skilled in the art that the signal processor 26 can digitally or include circuitry for processing the received signal in a desirable manner. Additionally, when the non-selected sub-channels are received, the signal processor 26 can determine the power level of the received signal without processing the received signal to produce an emitted output, according to one embodiment.

According to one embodiment, an audio output is produced by the receiver module 18 based upon the received signal using a speaker 28. It should be appreciated by those skilled in the art that the output emitted by the receiver module 18 can be an audio output, a video output, or a combination thereof. Additionally, the signal processor 26 is in communication with the controller 16, such that the controller 16 can control the switching device 14 based upon the signal received and processed by the signal processor 26, according to one embodiment.

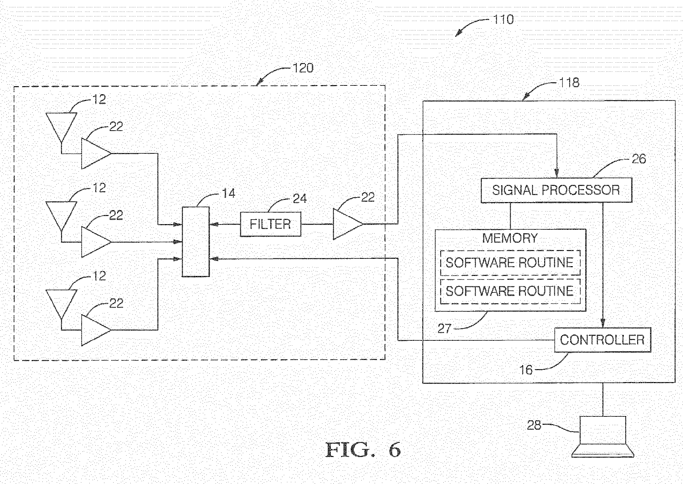

In reference to Fig. 6, an alternate embodiment of the receiver system 10 is generally shown at reference identifier 110, wherein like reference characters indicate like elements. An antenna module 120 houses the plurality of antenna elements 12. Additionally, the antenna module 120 houses the LNAs 22 that are in communication with the antenna elements 12, the switching device 14 that is in communication with the LNAs 22 to switch among the antenna elements 12, and a filter 24 in communication with the switching device 14, according to one embodiment. Additionally, a receiver module 118 can include the signal processor 26 and controller 16, according to a disclosed embodiment.

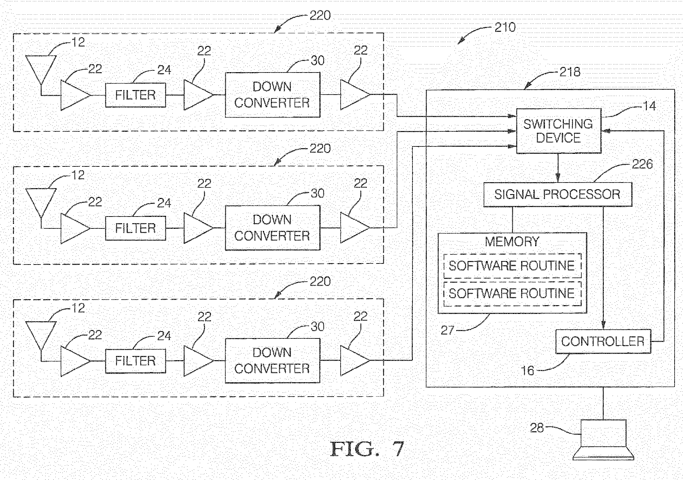

With regards to Fig. 7, an alternate embodiment of a receiver system is generally shown at reference identifier 210, wherein like reference characters indicate like elements. According to an alternate embodiment, an antenna module 220 houses the antenna elements 12, the LNAs 22, the filter 24, and a down-converter device 30. Typically, the down-converter device 30 converts the RF level of the received signal from the antenna element 12 to a lower frequency, such that the received signal can be communicated through the receiver system 210. According to one embodiment, a receiver module 218 can house the switching device 14, the controller 16, a signal processor 226, and the memory device 27. According to a disclosed embodiment, the signal processor 226 includes the circuitry and/or implements one or more software routines stored in the memory device 27 for digitally demodulating the received signal. However, it should be appreciated by those skilled in the art that the receiver module 18, 118, 218 can include additional circuitry and/or one or more software routines in order to perform other signal processing functions.

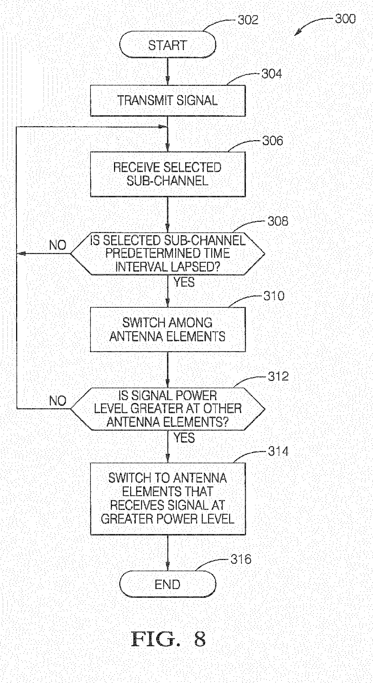

In reference to Figs. 4 - 8, a method of switching antenna elements 12 is generally shown in Fig. 8 at reference identifier 300. The method 300 starts at step 302, and proceeds to step 304, where the signal is transmitted. According to one embodiment, the transmitted signal is a TDM signal. At step 306, the selected sub-channel is received by the antenna element 12. At step 308, it is determined if the selected sub-channel predetermined time interval has lapsed. If it is determined that the predetermined time interval has not lapsed, then the method 300 returns to step 306 to continue receiving the selected sub-channel. According to one embodiment, the signal processor 26, 226 processes the received signal during the time interval of the selected sub-channel and along the time intervals of the non-selected sub-routines to emit the output. However, if it is determined at step 308 that the predetermined time interval for the selected sub-channel has lapsed, then the method 300 proceeds to step 310, where the switching device 14 switches among the antenna elements 12. Thus, each of the antenna elements 12 is used to receive the signal. At step 312, it is determined if the signal power level is greater using other antenna elements 12 than the antenna element 12 originally being used to receive the transmitted signal. According to one embodiment, the signal processor 26, 226 processes the received signal during the time intervals of the non-selected sub-channels to determine the power level, but not to produce the emitted output.

If it is determined at step 312 that the antenna element 12 originally used to receive the transmitted signal has a greater signal power level, then the method 300 returns to step 306 to receive the transmitted signal during the time interval of the selected sub-channel. However, if it is determined at step 312 that the signal power level is greater at another antenna element 12, then the method 300 proceeds to step 314, wherein the switching device 14 switches to the antenna element 12 that receives the signal at a greater power level in order to receive the transmitted signal during the time interval of the selected sub-channel. The method 300 then ends at step 316.

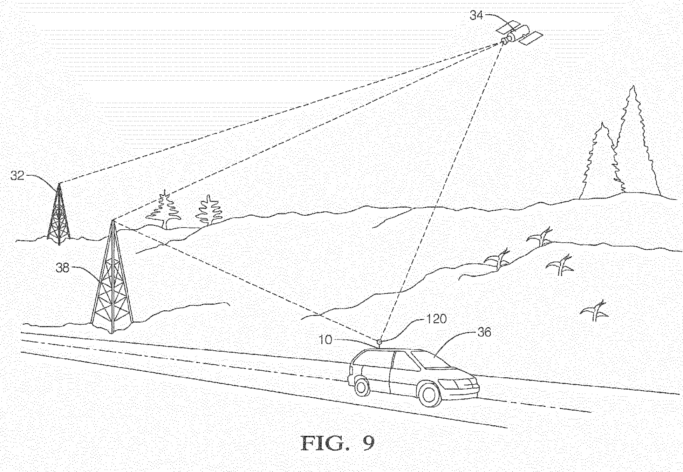

By way of explanation and not limitation, in reference to Fig. 9, the receiver system 10 receives a signal that is transmitted from a transmitter 32 and retransmitted by a satellite 34, such that the receiver system 10 is used in a satellite digital audio radio (SDAR). According to one embodiment, the receiver system 10 is used with a vehicle 36. Additionally, a terrestrial repeater 38 can be in communication with the satellite 34, such that the terrestrial repeater 38 receives the satellite RF signal from the satellite 34, and re-transmits the signal as a terrestrial RF signal, according to one embodiment.

Advantageously, the receiver system 10, 110, 210 and method 300 can switch among antenna elements 12 to determine which antenna element 12 receives the transmitted signal at a greater power level without needing to fully process the received signal, such as lock in a phase of the received signal at each antenna element 12. Since the signal is transmitted having sub-channels that are individually transmitted in predetermined time intervals, the receiver system 10, 110, 210 can switch among the antenna elements 12 during the predetermined time period associated with the predetermined time intervals of the sub-channels that are not selected. Thus, the receiver system 10 can determine the power level of the received signal in order for the receiver system 10 to make a determination as to whether or not to switch to a different antenna element 12 when receiving the transmitted signal during the selected sub-channel time interval based upon the power level of the received signal at the particular antenna element 12, and not making a blind switch.

It is to be understood that the invention has been described with reference to specific embodiments and variations to provide the features and advantages previously described and that the embodiments are susceptible of modification as will be apparent to those skilled in the art.

Furthermore, it is contemplated that many alternative, common inexpensive materials can be employed to construct the basis constituent components. Accordingly, the forgoing is not to be construed in a limiting sense.

The invention has been described in an illustrative manner, and it is to be understood that the terminology, which has been used is intended to be in the nature of words of description rather than of limitation.

The above description is considered that of preferred embodiments only. Modifications of the invention will occur to those skilled in the art and to those who make or use the invention. Therefore, it is understood that the embodiments shown in the drawings and described above are merely for illustrative purposes and not intended to limit the scope of the invention, which is defined by the following claims as interpreted according to the principles of patent law, including the doctrine of equivalents.

The following documents are deemed to provide a fuller disclosure of the inventions described herein and the manner of making and using same. Accordingly, each of the below-listed documents are hereby incorporated in the specification hereof by reference:
U.S. Patent Application No. 2002/0052180 A1 to Ravishankar et al. entitled "System and Method for Mobility Management for a Satellite Based Packet Date System".
U.S. Patent Application No. 2004/0137842 A1 to Iwata et al. entitled "Method of Receiving Signals".
U.S. Patent Application No. 2007/0192805 A1 to Dutta et al. entitled "Adaptive Spotbeam Broadcasting, Systems, Methods and Devices for High Bandwidth Content Distribution over Satellite".
U.S. Patent No. 7,580,798 B1 to Barrett entitled "Comprehensive Network Monitoring at Broadcast Satellite Sites Located outside of the Broadcast Service Area".
U.S. Patent No. 7,773,697 B2 to Dibiaso et al. entitled "Method to Demodulate Amplitude Offsets in a Differential Modulation System".
U.S. Patent No. 7,822,149 B2 to Dibiaso et al. entitled "Method to Enable Single Frequency Network Optimization".
U.S. Patent No. 7,830,983 B2 to Dibiaso et al. entitled "Method to Minimize Degradation in a D-MPSK Hierarchical Modulation System".
U.S. Patent No. 7,957,333 B2 to Walker et al. entitled "Receiver System and Method for Switching among a Plurality of Antenna Elements to Receive a Signal".
U.S. Patent No. 8,014,479 B2 to Walker et al. entitled "Method and System for Communicating Sub-Synchronization Signals using a Phase Rotator".
U.S. Patent No. 8,107,557 B2 to Lindenmeier et al. entitled "Reception System having a Switching Arrangement for Suppressing Change-Over Interference in the Case of Antenna Diversity".

## Claims

1. A terrestrial radio receiver (58) for recovering universal services in a spot beam satellite radio transmission system (46) including at least two discrete signal sources (48 and 50) producing first and second adjacent or overlapping spot beam loci (52 and 54) within a coverage area (42), wherein signals (60 and 62) forming said first and second spot beams (52 and 54) each contain repeating time aligned universal services having a master synchronizing frame, at least one common channel, and at least one spot specific channel with differing frequency and/or polarization, said receiver (58) comprising:
a plurality of antenna elements (12), wherein at least a portion of said plurality of antenna elements (12) simultaneously receive said first and second spot beams (52 and 54);
a switching device (14) in communication with said plurality of antenna elements (12), wherein said switching device (14) selectively switches among single antenna elements (12) of said plurality of antenna elements (12) to receive said spot beam signals (60 and 62); and
a controller (16) in communication with said switching device (14), wherein said controller (16) commands said switching device (14) to select each said plurality of antenna elements (12) separately during said master synchronizing frame, such that a power level of said signal is determined during a predetermined period of time that corresponds to said master synchronizing frame time intervals, and wherein said controller (16) commands said switching device (14) to switch to an antenna element (12) based upon said determined power level.

2. The radio receiver (58) of claim 1, wherein said spot beam satellite radio transmission system (46) operates in accordance with satellite radio standard DVB-SH or E-SDR.

3. The radio receiver (58) of claim 1, wherein said transmitted signals (60 and 52) are time division multiplexed (TDM).

4. The radio receiver (58) of claim 3, wherein each said TDM transmitted signal (60 and 62) comprises five said sub-channels, such that different data is transmitted in said five sub-channels.

5. The radio receiver (58) of claim 1 further comprising a receiver module (18) in communication with said plurality of antenna elements (12), wherein said receiver module (18) processes said transmitted signal to produce an output based upon said selected sub-channel, and determines said power level of said transmitted signal at at least a portion of said plurality of antenna elements (12) during a predetermined period of time that corresponds to said time interval of a non-selected said sub-channel, and wherein said controller commands said switching device (14) to switch to an antenna element (12) with a greater said determined power level to receive said transmitted signal during said time interval of said selected sub-channel.

6. The radio receiver (58) of claim 5, wherein said receiver module (18) houses at least one of said switching device (14) and said controller (16).

7. The radio receiver (58) of claim 1 further comprising an antenna module (20) housing at least one of said plurality of antenna elements (12).

8. The radio receiver (58) of claim 6, wherein said switching device (14) is housed in said antenna module (20).

9. The radio receiver (58) of claim 1, wherein said receiver (58) is used with a vehicle device (36).

10. A method of switching among antenna elements (12) in a terrestrial radio receiver (58) for recovering universal services in a spot beam satellite radio transmission system (46) including at least two discrete signal sources (48 and 50) producing first and second adjacent or overlapping spot beam loci (52 and 54) within a coverage area (42), wherein signals (60 and 62) forming said first and second spot beams (52 and 54) each contain repeating time aligned universal services having a master synchronizing frame, at least one common channel, and at least one spot specific channel with differing frequency and/or polarization, said method comprising the steps of:
providing a plurality of antenna elements (12), wherein at least a portion of said plurality of antenna elements (12) simultaneously receive said first and second spot beams (52 and 54);
transmitting a signal comprising a plurality of sub-channels, wherein said sub-channels are transmitted in predetermined time intervals;
receiving said transmitted signals (60 and 62) by an antenna element (12) of a plurality of antenna elements (12), wherein said transmitted signals (60 and 62) containing said master sampling frame is processed;
switching among at least a portion of said plurality of antenna elements (12) and receiving said transmitted signal during a predetermined period of time that corresponds to said master synchronizing frame;
determining a power level of said transmitted signal during said master synchronizing frame; and
switching to said antenna element (12) receiving said transmitted signal at a greater determined power level during said master synchronizing frame.

11. The method of claim 10, wherein said transmitted signals (60 and 62) are time division multiplexed (TDM).

12. The method of claim 10, wherein said TDM transmitted signals (60 and 62) each comprise five said sub-channels, such that different data is transmitted in said five sub-channels, and said predetermined master synchronizing frame corresponds to a predetermined time interval of non-selected sub-channels.

13. The method of claim 10, wherein said method is used with a vehicle device (36).

14. The method of claim 10, further comprising the step of providing a receiving module, wherein said receiving module processes said transmitted signal to determine said power level during said predetermined time period.
